# EUROPÄISCHE PATENTANMELDUNG

(11) **EP 4 084 399 A1**
(43) Veröffentlichungstag der Anmeldung: **02.11.2022**
(21) Anmeldenummer: 21200279.4
(22) Anmeldetag: 30.09.2021
(51) Int. Cl.: H04L 9/32

(54) **COMPUTERIMPLEMENTIERTES VERFAHREN ZUR BEREITSTELLUNG VON KRYPTOGRAPHISCHEN SCHLÜSSELN ZUR DATENSIGNATUR, SIGNATURMODUL, VERFAHREN ZUR DATENSIGNATUR UND VERFAHREN ZUR AUTHENTIFIZIERTEN KOMMUNIKATION**

(30) Priorität: 30.04.2021 DE 102021204340
(71) Anmelder: Siemens Aktiengesellschaft, 80333 München (DE)
(72) Erfinder: Aschauer, Dr. Hans, 81829 München (DE); De Santis, Dr. Fabrizio, 80634 München (DE); Falk, Dr. Rainer, 85586 Poing (DE); Furch, Dr. Andreas, 85354 Freising (DE); Schneider, Daniel, 80796 München (DE); Zeschg, Thomas, 81543 München (DE)

(57) **Zusammenfassung**

Bei dem Computerimplementiertes Verfahren zur Bereitstellung von kryptographischen Schlüsseln (200) zur Datensignatur werden eine Mehrzahl von Schlüsseln (200) als Blätter einer Hashbaum-Struktur (100) mit mindestens einem ersten Hashbaum (30) bereitgestellt und es ist die Anzahl von Hashbäumen (30, 500, 600) der Hashbaumstruktur (100) nicht vorbestimmt und es wird ein Bedarfskriterium für einen Bedarf an zusätzlichen Schlüsseln (200) herangezogen und ausgewertet und dann, wenn festgestellt wird, dass das Bedarfskriterium erfüllt ist, eine Anzahl zusätzlicher Schlüssel (200) generiert, welche als Blätter mindestens eines weiteren Hashbaums (500, 600) bereitgehalten werden, wobei der mindestens eine weitere Hashbaum (500, 600) derart in die Hashbaum-Struktur (100) integriert wird, dass jeweils die Wurzel des mindestens einen weiteren Hashbaums (500, 600) jeweils mit einem Schlüssel (40) eines Blatts der Hashbaum-Struktur (100) signiert wird.

## Beschreibung

Die Erfindung betrifft ein computerimplementiertes Verfahren zur Bereitstellung von kryptographischen Schlüsseln zur Datensignatur ein Signaturmodul, ein Verfahren zur Datensignatur sowie ein Verfahren zur authentifizierten Kommunikation.

Die Sicherheit aktueller asymmetrischer kryptographischer Verfahren, insbesondere von Signaturverfahren, beruht regelmäßig auf der Schwierigkeit, eine bestimmte Art von mathematischen Problemen zu lösen. Insbesondere handelt es sich um Trapdoor-Funktionen, also Funktionen, die sich in einer Richtung einfach berechnen lassen, aber schwierig in der anderen Richtung, wenn man eine bestimmte Zusatz-Information nicht besitzt. Solche mathematischen Probleme stellen etwa das Faktorisierungsproblem oder das Diskreter-Logarithmus-Problem oder das Diskreter-Logarithmus-Problem elliptischer Kurven dar. Diese Verfahren werden in Zukunft mit leistungsfähigen Quantencomputern angreifbar sein. Daher werden gegenwärtig neue kryptographische Verfahren entwickelt, die - aus heutiger Sicht - sicher gegen Angriffe mit künftigen Quantencomputern sind. Solche kryptographischen Verfahren werden auch als Post-Quantum-Kryptographie-Verfahren bezeichnet.

Ein aktuell verfolgter Ansatz für Signaturverfahren in der Post-Quantum-Kryptographie bildet die hashbasierte Kryptographie, mittels welcher digitale Signaturen erstellt werden können.

Hashbasierte kryptographischer Signaturverfahren werden seit den 1970er Jahren entwickelt und beruhen insbesondere auf Lamport-Signaturen und Merkle-Signatur-Verfahren und werden gegenwärtig durch neuere Algorithmen wie dem XMSS-Verfahren (XMSS = (engl.) *"Extended Merkle Signature Scheme"*) oder dem LMS-Verfahren (LMS = (engl.) *"Leighton-Micali Signatures"*) erweitert. Das XMSS-Verfahren nutzt dabei als Signaturverfahren ein modifiziertes Winternitz-Signaturverfahren, also ein One-Time-Signaturverfahren, und verknüpft dieses Signaturverfahren mit Hashbäumen (engl. *"Hash Trees"*)*.* Die Hashbäume bestehen beim XMSS-Verfahren aus sogenannten L-Bäumen (engl. "L *Trees"*) und einem Merkle-Baum (engl. *"Merkle Tree"*)*,* wodurch mehrere One-Time-Signaturen mit einem öffentlichen Schlüssel verifiziert werden können, da alle öffentlichen Schlüssel in dem Merkle-Baum enthalten sind; die Wurzel des Merkle-Baums stellt dann den kombinierten öffentlichen Schlüssel dar. Unter der Bezeichnung Root ist dabei im Rahmen der vorliegenden Anmeldung die Wurzel eines Hashbaums zu verstehen, sodass die Begriffe Root und Wurzel synonym Verwendung finden.

Hashbasierte Verfahren wie das XMSS-Verfahren und das LMS-Verfahren beruhen auf einer effizienten Verknüpfung einer festgelegten Anzahl von One-Time-Signaturschlüsseln. Folglich können mit den vorgenannten Verfahren auch höchstens so viele Signaturen erstellt werden, wie es der zuvor festgelegten Anzahl entspricht. Diese maximale Anzahl von Signaturen wird vor der Schlüsselerzeugung festgelegt. Wird die maximale Anzahl von Signaturen recht groß gewählt, so skaliert die Dauer der Schlüsselerzeugung linear mit der Anzahl der Signaturen. Die Länge der Signaturen wächst mit dem Logarithmus der Anzahl der Signaturen.

Um die Schlüsselerzeugung für Schlüssel mit einer großen Anzahl von Signaturen zu beschleunigen, wurden Multi-Tree-Varianten von XMSS und LMS entwickelt. Diese Mutli-Tree-Verfahren verwenden nicht einen einzigen Merkle-Baum, sondern einen Baum von Merkle-Bäumen, d.h. einen Baum, dessen Knoten und Blätter jeweils einen XMSS-Baum enthalten; ein solcher Baum wird im Folgenden auch als Teilbaum bezeichnet Da hierbei die Schlüsselerzeugung als Teil der Signatur-Erzeugung erfolgen und insbesondere nach der Wurzelerzeugung geschehen kann, können mit diesem Verfahren auch große Anzahlen von Schlüsseln erzeugt werden.

Ähnlich wie beim einfachen XMSS oder LMS-Verfahren muss aber auch bei den Multi-Tree-Verfahren die maximale Anzahl von Signaturen bei der Schlüsselerzeugung festgelegt sein.

In vielen Anwendungsfällen ist jedoch noch gar nicht bekannt, wie viele Signaturen überhaupt benötigt werden. Daher werden in der Praxis häufig unnötig viele Signaturen vorgesehen, sodass die Signaturen unnötig lang gewählt werden und somit ein unnötig hoher Rechenaufwand gewählt wird.

Es ist daher Aufgabe der Erfindung, ein verbessertes computerimplementiertes Verfahren zur Bereitstellung von kryptographischen Schlüsseln zur Datensignatur anzugeben, bei welchem der Rechenaufwand leicht geringgehalten werden kann. Ferner ist es Aufgabe der Erfindung, ein verbessertes Signaturmodul sowie ein verbessertes Verfahren zur Datensignatur und ein verbessertes Verfahren zur authentifizierten Kommunikation anzugeben, welche mit dem verbesserten Verfahren zur Bereitstellung von kryptographischen Schlüssen zur Datensignatur durchgeführt werden können.

Diese Aufgabe der Erfindung wird mit einem Verfahren zur Bereitstellung von kryptographischen Schlüsseln zur Datensignatur mit den in Anspruch 1 angegebenen Merkmalen sowie mit einem Signaturmodul mit den in Anspruch 12 angegebenen Merkmalen und mit einem Verfahren zur Datensignatur mit den in Anspruch 13 angegebenen Merkmalen sowie mit einem Verfahren zur authentifizierten Kommunikation mit den in Anspruch 14 angegebenen Merkmalen gelöst. Bevorzugte Weiterbildungen der Erfindung sind in den zugehörigen Unteransprüchen, der nachfolgenden Beschreibung und der Zeichnung angegeben.

Das erfindungsgemäße Verfahren zur Bereitstellung von kryptographischen Schlüsseln zur Datensignatur ist computerimplementiert. Bei dem erfindungsgemäßen Verfahren wird eine Mehrzahl von Schlüsseln als Blätter einer Hashbaum-Struktur mit mindestens einem ersten Hashbaum bereitgehalten, wobei die Anzahl von Hashbäumen der Hashbaumstruktur nicht vorbestimmt ist. Bei dem erfindungsgemäßen Verfahren wird ein Bedarfskriterium für einen Bedarf an zusätzlichen Schlüsseln herangezogen und ausgewertet und es wird dann, wenn festgestellt wird, dass das Bedarfskriterium erfüllt ist, eine Anzahl zusätzlicher Schlüssel generiert. Bei dem erfindungsgemäßen Verfahren werden die zusätzlich generierten Schlüssel als Blätter mindestens eines weiteren Hashbaums bereitgehalten, wobei der mindestens eine weitere Hashbaum derart in die Hashbaum-Struktur integriert wird, dass jeweils die Wurzel des mindestens einen weiteren Hashbaums mit einem Schlüssel eines Blatts der Hashbaum-Struktur signiert wird. Ein Schlüssel eines Blatts bedeutet dabei ein Schlüssel, welcher dieses Blatt bildet.

Mittels des erfindungsgemäßen Verfahrens müssen also nicht Hashbäume von vorgegebener Anzahl, Höhe und Struktur verwendet werden, sondern Hashbaum-Strukturen können bedarfsabhängig dann wachsen, wenn ein Bedarf an neuen Schlüsseln absehbar ist. Es wird also bei dem erfindungsgemäßen Verfahren erst dann ein neuer Hashbaum im Sinne eines Teilbaums wie oben beschrieben gebildet, wenn die Bereitstellung neuer Schlüssel erforderlich erscheint. Somit ist die Anzahl der erforderlichen Schlüssel nicht durch eine vorab festgelegte Hashbaum-Struktur mit vorbestimmter Anzahl von Hashbäumen vorbestimmt, d. h. vorab bestimmt. Vorteilhaft ist die Anzahl bereitstellbarer kryptographischer Schlüssel erfindungsgemäß grundsätzlich unbeschränkt, sodass sich das erfindungsgemäße Verfahren vorteilhaft auch bei Anwendungen mit hohen Verfügbarkeitsanforderungen und damit einhergehend mit einem hohen und anhaltenden Bedarf an neuen kryptographischen Schlüsseln einsetzen lässt. Die Hashbaum-Struktur muss vorteilhaft nicht vorab für eine bestimmte Anzahl an Schlüsseln ausgelegt werden.

Bei dem erfindungsgemäßen Verfahren wird folglich eine Anzahl der Signaturen nicht zuvor festgelegt, sondern die Hashbaumstruktur wächst abhängig von einem aktuell ausgewerteten Bedarfskriterium. Da folglich die Anzahl an Signaturen und die Tiefe der Hashbaumstruktur nicht vorab unnötig hoch gewählt werden muss, müssen die Signaturen nicht unnötig lang gewählt werden und der Rechenaufwand zur Erzeugung und zum Einsatz der Signaturen erhöht sich allenfalls insoweit, als dieser vermehrte Rechenaufwand durch einen Bedarf an neu bereitzustellenden Schlüsseln überhaupt erforderlich ist.

Bevorzugt werden bei dem erfindungsgemäßen Verfahren die Verfahrensschritte des ersten Anspruchs wiederholt.

In einer vorteilhaften Weiterbildung des erfindungsgemäßen Verfahrens ist die Hashbaum-Struktur eine Multi-Tree-Struktur und vorzugsweise sind der erste Hashbaum und idealerweise der weitere Hashbaum XMSS-Hashbäume. In dieser Weiterbildung des erfindungsgemäßen Verfahrens lassen sich etablierte Hashbaum-Strukturen bekannter kryptographische Signaturverfahren einsetzten. Auf diese Weise können bereits bestehende kryptographische Systeme leicht aktualisiert und angepasst und zur Nutzung der erfindungsgemäßen Lösung erweitert werden.

Geeigneterweise sind die Schlüssel bei dem erfindungsgemäßen Verfahren Einmalschlüssel oder sogenannte "Few-time signatures", zu deutsch auch als "Paarmalschlüssel" bezeichnet. Gerade Einmalschlüssel oder Paarmalschlüssel können, vorzugsweise mittels an sich bekannter hashbasierter kryptographischer Verfahren, nach gegenwärtigem Kenntnisstand sicher gegenüber quantencomputerunterstützen Angriffen ausgebildet und verwendet werden.

Besonders bevorzugt sind bei dem erfindungsgemäßen Verfahren die Schlüssel hashbasierte Schlüssel. Das Auffinden von Urbildern einer Hash-Funktion ist nach gegenwärtigem Kenntnisstand auch für Quantencomputer hinreichend schwierig, sodass das erfindungsgemäße Verfahren auch bei einer künftigen Verfügbarkeit leistungsfähiger Quantencomputer sicher durchführbar bleibt.

Bevorzugt sind bei dem erfindungsgemäßen Verfahren die Schlüssel jeweils öffentliche Schlüssel je eines asymmetrischen Schlüsselpaares. Alternativ oder zusätzlich und ebenfalls bevorzugt sind die Schlüssel jeweils private Schlüssel je eines asymmetrischen Schlüsselpaares.

Bei dem Verfahren gemäß der Erfindung sind die Schlüssel vorzugsweise jeweils Winternitz-Signatur-Schlüssel, also Schlüssel, die zur Signatur nach dem Winternitz-Signatur-Verfahren ausgebildet sind. Alternativ oder zusätzlich und ebenfalls bevorzugt sind bei dem erfindungsgemäßen Verfahren die Schlüssel jeweils Lamport-Signatur-Schlüssel, also Schlüssel, die zur Signatur nach dem Lamport-Signatur-Verfahren ausgebildet sind. Alternativ oder zusätzlich und ebenfalls bevorzugt sind bei dem erfindungsgemäßen Verfahren die Schlüssel jeweils HORST-Signatur-Schlüssel, also Schlüssel, die zur Signatur nach dem HORST-Signatur-Verfahren, einem Paarmal-Signaturverfahren, ausgebildet sind. Insbesondere die drei vorgenannten Signaturverfahren sind als quantencomputerresistent bekannt, sodass in dieser Weiterbildung das erfindungsgemäße Verfahren besonders zukunftssicher ausgebildet ist.

Bevorzugt hängt bei dem erfindungsgemäßen Verfahren das Bedarfskriterium von einer Anzahl bereits zur Signatur genutzter Schlüssel der Hashbaum-Struktur ab. In dieser Weiterbildung des erfindungsgemäßen Verfahrens kann der Bedarf an zusätzlichen Schlüsseln anhand eines Nutzungsfortschritts bei der Nutzung der bereitgestellten Schlüssel prognostiziert werden und die Hashstruktur vorausschauend um einen künftig zu erwartendem Bedarf erweitert werden.

Alternativ oder zusätzlich und ebenfalls bevorzugt hängt bei dem erfindungsgemäßen Verfahren das Bedarfskriterium von einer Anzahl noch zur Nutzung vorgesehener Schlüssel und/oder von einem Alter der Hashbaum-Struktur oder des ersten Hashbaums ab.

Das erfindungsgemäße Signaturmodul ist zur Ausführung eines computerimplementierten Verfahrens zur Bereitstellung von kryptographischen Schlüsseln wie zuvor beschrieben ausgebildet und das Signaturmodul weist dazu einen Speicher, speichernd eine Hashbaum-Struktur einem ersten Hashbaum mit einer Mehrzahl von Schlüsseln als Blätter der Hashbaumstruktur und mit einer nicht zuvor festgelegten Anzahl von Hashbäumen, auf und umfasst eine Auswerteinheit zur Auswertung einer Erfüllung eines Bedarfskriteriums sowie ein Schlüsselgenerierungsmodul, welches abhängig von der Erfüllung des Bedarfskriteriums zur Generierung zusätzlicher Schlüssel als Blätter mindestens eines weiteren Hashbaums eingerichtet ist und welches zur Integration des mindestens einen weiteren Hashbaums in die Hashbaum-Struktur mittels einer Signatur je einer Wurzel des mindestens einen weiteren Hashbaums mit einem Schlüssel eines Blatts der Hashbaum-Struktur eingerichtet ist.

Bei dem erfindungsgemäßen Verfahren zur Datensignatur wird mittels eines zuvor beschriebenen erfindungsgemäßen Verfahrens zur Bereitstellung von kryptographischen Schlüsseln im Falle eines Bedarfs an zusätzlichen kryptographischen Schlüsseln mindestens ein zusätzlicher kryptographischer Schlüssel bereitgestellt und mittels des mindestens einen zusätzlichen kryptographischen Schlüssels mindestens eine Datei signiert, vorzugsweise mittels eines erfindungsgemäßen Signaturmoduls wie zuvor beschrieben.

Bei dem erfindungsgemäßen Verfahren zur authentifizierten Kommunikation erfolgt die Kommunikation mittels mindestens einer signierten Datei, wobei die mindestens eine signierte Datei mittels eines Verfahrens zur Datensignatur wie zuvor beschrieben verschlüsselt wird.

Nachfolgend wird die Erfindung anhand eines in der Zeichnung angegebenen Ausführungsbeispiels näher erläutert. Es zeigen:
- Fig. 1: eine aus dem Stand der Technik bekannte Hashbaum-Struktur mit einer Mehrzahl von XMSS-Bäumen schematisch in einer Prinzipskizze,
- Fig. 2: eine Hashbaum-Struktur in einem Speicher eines erfindungsgemäßen Signaturmoduls zu einem ersten Zeitpunkt bei der Ausführung eines erfindungsgemäßen Verfahrens zur Bereitstellung von kryptographischen Schlüsseln schematisch in einer Prinzipskizze,
- Fig. 3: die Hashbaum-Struktur gemäß Fig. 2 zu einem zweiten, dem ersten Zeitpunkt nachfolgenden, Zeitpunkt schematisch in einer Prinzipskizze sowie
- Fig. 4: die Hashbaum-Struktur gemäß Fig. 2 und 3 zu einem dritten, dem zweiten Zeitpunkt nachfolgenden, Zeitpunkt schematisch in einer Prinzipskizze.

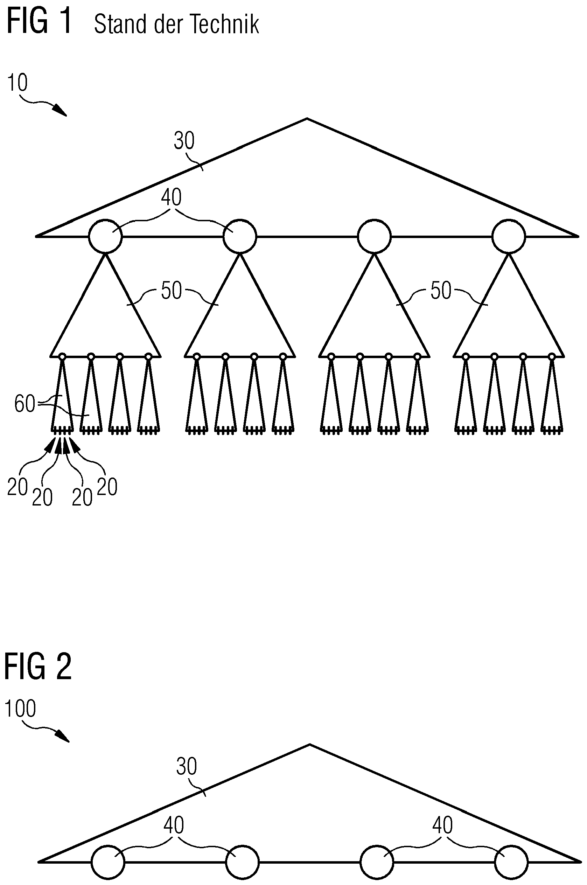

Die in Fig. 1 dargestellte Hashbaum-Struktur 10 dient in an sich aus dem Stand der Technik bekannter Weise zur digitalen Signatur von Daten.

Dazu stellt die Hashbaum-Struktur 10 digitale Signaturschlüssel 20 bereit (in der Zeichnung einheitlich mit dem Bezugszeichen 20 bezeichnet; es versteht sich, dass die Signaturschlüssel 20 untereinander verschieden und nicht identisch sind).

Zur Bereitstellung der Signaturschlüssel 20 weist die Hashbaum-Struktur 10 einen ersten XMSS-Baum 30, der mit einem Merkle-Baum und L-Bäumen gebildet ist, auf. Der XMSS-Baum 30 umfasst in an sich bekannter Weise als Blätter Einmalschlüssel 40, mittels welchen Nutzerdaten digital signiert werden können. Diese Einmalschlüssel 40 dienen bei der HashbaumStruktur 10 gemäß Fig. 1 nicht zur direkten Signatur von Nutzerdaten, sondern mittels der Einmalschlüssel 40 sind Wurzeln weiterer, gleichartig aufgebauter, XMSS-Bäume 50 signiert. Mit Blättern dieser XMSS-Bäume 50 sind wiederum weitere XMSS-Bäume 60 signiert, deren Blätter nun die Signaturschlüssel 20 bilden. Mittels dieser Signaturschlüssel 20 stehen Schlüssel der Hashbaum-Struktur 10 bereit, mittels welchen Nutzerdaten, beispielsweise elektronische Dokumente (in der Figur 1 nicht explizit gezeigt), digital signiert werden können.

Der öffentliche Schlüssel wird mit der Wurzel des ersten XMSS-Baums 30 gebildet, hier als Spitze des den ersten XMSS-Baum 30 symbolisierenden Dreiecks dargestellt. Die digitalen Signaturen, die mittels eines Signaturschlüssels 20 erzeugt werden, enthalten die vollständige Signatur-Kette der XMSS-Bäume 60, der XMSS-Bäume 50 der darüber liegenden Ebene der Hashbaum-Struktur 10 sowie des ersten XMSS-Baums 30.

Gemäß der in Fig. 1 dargestellten Hashbaum-Struktur 10 ist die Tiefe der Hashbaum-Struktur 10 sowie die Wahl der XMSS-Bäume 50, 60, die an den ersten XMSS-Baum 30 angebunden sind, bereits bei der Schlüsselerzeugung festgelegt. Unter einer Tiefe der Hashbaum-Struktur 10 ist dabei die Anzahl von mittels Einmalsignaturen 40 miteinander verknüpften Wurzeln von XMSS-Bäumen 50, 60, 30 zu verstehen, mittels welchen die Signaturschlüssel 20 mit der Wurzel des ersten XMSS-Baums 30 verknüpft sind. Die Tiefe der Hashbaum-Struktur 10 insgesamt meint dabei die maximale Anzahl der verknüpften Wurzeln, die bei Signaturschlüssel 20 auftreten kann. Die lokale Tiefe der Hashbaum-Struktur 10 bei einer konkreten Signatur mit Hilfe der Signaturschlüssel 20 hingegen meint die miteinander verknüpften Wurzeln ausgehend von dem konkreten Signaturschlüssel 20 bis zur Wurzel des ersten XMSS-Baumes 30. Somit steht die Tiefe der Hashbaum-Struktur 10 und die Anzahl der möglichen Signaturschlüssel 20 zum Zeitpunkt der Schlüsselerzeugung des öffentlichen Schlüssels, hier der Wurzel des ersten XMSS-Baums 30, bereits fest: Im in Fig. 1 dargestellten Ausführungsbeispiel können mit jedem individuellen XMSS-Baum 60, 30, oder 60 vier Signaturen durchgeführt werden. Diese Anzahl ist im dargestellten Ausführungsbeispiel für Darstellungszwecke gewählt. In weiteren Ausführungsbeispielen, welche im Übrigen dem dargestellten Ausführungsbeispiel entsprechen, sind je XMSS-Baum 60 2⁵, d.h. 32, Signaturen, 2¹⁰ Signaturen oder 2²⁰ Signaturen vorgesehen.

Bei dem erfindungsgemäßen Verfahren zur Bereitstellung von kryptographischen Schlüsseln steht die Anzahl der Signaturschlüssel 200 und insbesondere die Anzahl der XMSS-Bäume der Hashbaum-Struktur 100 im Unterschied zum Stand der Technik nicht von vornherein fest.

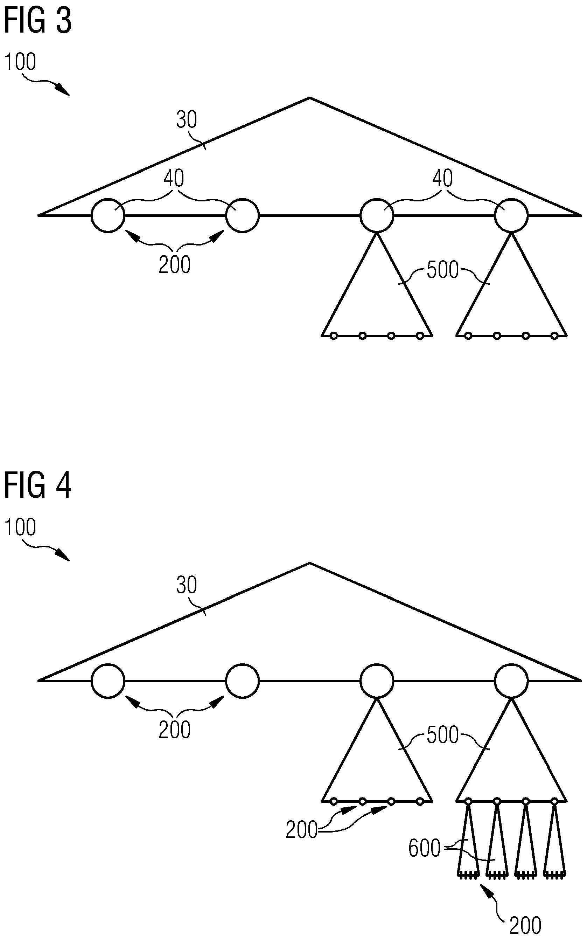

Bei dem erfindungsgemäßen Verfahren wird eine Hashbaum-Struktur 100 gebildet, indem mit einem ersten XMSS-Baum 30 wie in Fig. 2 dargestellt begonnen wird. Dabei wird die Tiefe der Hashbaum-Struktur 100 jedoch dynamisch festgelegt:
Dazu wird ein Bedarfswert festgelegt, bei dessen Erreichen die Tiefe der Hashbaum-Struktur 100 wächst. Im in den Figuren 2, 3 und 4 dargestellten Ausführungsbeispiel ist der Bedarfswert festgelegt als Verbrauch von 50 Prozent der bislang verfügbaren Einmalschlüssel 40. Zunächst werden bei dem erfindungsgemäßen Verfahren also die Blätter 40 des ersten XMSS-Baums 30 als Signaturschlüssel 200 herangezogen. Wenn ein Anteil in Höhe von 50 Prozent der zur Verfügung stehenden Blätter des ersten XMSS-Baums 30 bereits benutzt worden ist, dann werden die verbleibenden Einmalschlüssel 40 nicht selbst als Signaturschlüssel 200 herangezogen, sondern die verbleibenden Einmalschlüssel 40 des ersten XMSS-Baums 30 werden zum Signieren von Wurzeln weiterer XMSS-Bäume 500 genutzt. Diese weiteren XMSS-Bäume 500 werden bei Erreichen des Bedarfswerts angelegt und mittels Signierens mit den Einmalschlüsseln 40 in die bisherige Hashbaum-Struktur 100 integriert. In der Darstellung der Fig. 3 stehen nunmehr 8 weitere Einmalschlüssel 40 zur Verfügung, die grundsätzlich als Signaturschlüssel 200 genutzt werden können.

Wird nun wiederum die Hälfte der verbleibenden 8 Signaturschlüssel genutzt, also gewissermaßen verbraucht, so werden mit dem verbleibenden Einmalschlüsseln der XMSS-Bäume 500 des Baumes die Wurzeln abermals neu generierter XMSS-Bäume 600 signiert.

Dieses Verfahren lässt sich beliebig oft wiederholen, so dass grundsätzlich beliebig viele Signaturen mit Hilfe der Signaturschlüssel 200 erzeugt werden können. Die Signatur einer Nachricht oder eines Dokuments mit einem Signaturschlüssel 200 wird also bei dem erfindungsgemäßen Verfahren stets mittels eines Einmalschlüssel eines XMSS-Baums 30, 500, 600 auf der der lokal untersten Ebene der Hashbaum-Struktur 100 vorgenommen, d. h. mittels eines Einmalschlüssels 40, mittels welchem keine Wurzel eines weiteren XMSS-Baums signiert worden ist.

Bei der Ausführung des erfindungsgemäßen Verfahrens wächst die Tiefe der Hashbaum-Struktur 100. Dadurch werden die erzeugten Signaturschlüssel 200 immer länger. Die Länge der erfindungsgemäß erzeugten Signaturschlüssel 200 bleibt aber nach wie vor vergleichbar mit Signaturschlüsseln 20, die nach dem Verfahren nach dem Stand der Technik erzeugt werden. Grundsätzlich kann in weiteren Ausführungsbeispielen ein geeigneter Kompromiss gewählt werden, der in einem geeigneten Bedarfswert resultiert: So kann der Bruchteil von Signaturschlüsseln 200, die verbraucht sein müssen, bis man in die Hashbaum-Struktur 100 einen neuen XMSS-Baum 600 integriert, geeignet gewählt werden.

In weiteren Ausführungsbeispielen muss die Integration neuer XMSS-Bäume 500, 600 nicht beim Erreichen eines bestimmten, festen Anteils von verbrauchten Signaturschlüsseln 200 erfolgen. Vielmehr kann auch ein Bedarfswert gewählt werden, welcher von der aktuellen Tiefe der Hashbaum-Struktur 100 abhängt, wobei der Bedarfswert optional auch zusätzlich weitere Umstände, etwa ein Alter der Hashbaum-Struktur 100 oder eine Anzahl der bislang genutzten Signaturschlüssel 200 pro Zeiteinheit umfassen kann.

In weiteren nicht eigens dargestellten Ausführungsbeispielen müssen die in die Hashbaum-Struktur 100 integrierten XMSS-Bäume 500, 600 nicht notwendig dieselbe Größe aufweisen, sondern es können beispielsweise zunächst XMSS-Bäume mit 2⁵ Einmalschlüsseln 40 integriert werden und dann, wenn eine Anforderungsfrequenz je Zeiteinheit zunimmt, XMSS-Bäume mit 2²⁰ Einmalschlüsseln 40 integriert werden, die dann potentiell als Signaturschlüssel 200 zur Verfügung stehen.

In weiteren nicht eigens dargestellten Ausführungsbeispielen kann der Bedarfswert zusätzlich festlegen, an welcher Stelle ein XMSS-Baum 500, 600 in welcher Größe hinzugefügt werden soll, um den Bedarf an neuen Signaturschlüsseln 200 zu erfüllen. Denn wenn neue XMSS-Bäume 500, 600 in einer bereits vorhandenen Ebene der Hashbaum-Struktur 100 eingefügt werden, d. h., wenn neu integrierte XMSS-Bäume 500, 600 die Tiefe der Hashbaum-Struktur 100 nicht erhöhen, dann bleibt die Signaturlänge gleich. Die Signaturschlüssel werden nur länger mit der lokalen Tiefe der Hashbaum-Struktur 100, d. h. mit der Tiefe der Hashbaum-Struktur 100 bei dem Signaturschlüssel 200.

Da bei dem erfindungsgemäßen Verfahren die Hashbaum-Struktur 100 dynamisch und nicht von vornherein im Einzelnen festgelegt wächst, wird bei dem Verfahren zusätzlich gespeichert, an welcher Stelle ein XMSS-Baum in die Hashbaum-Struktur 100 integriert wird. Diese Information wird integritätsgeschützt intern oder extern gespeichert. In nicht eigens dargestellten Ausführungsbeispielen wird diese Information aus der Anzahl bisher genutzter Signaturschlüssel 200 berechnet.

In einem Ausführungsbeispiel des erfindungsgemäßen Verfahrens zur Datensignatur wird nicht die vollständige Signatur-Kette bereitgestellt, sondern nur ein Teil der Signatur von demjenigen XMSS-Baum 500, 600, 30, in welchem der Signaturschlüssel 200 enthalten ist, da die übrigen Signaturen bereits geprüft worden und integritätsgeschützt abgespeichert sind. In diesem Fall muss also die Länge der Signaturschlüssel 200 nicht mit der Tiefe der Hashbaum-Struktur 100 bei dem Signaturschlüssel 200 mitwachsen. Diese Variante kann vorteilhafterweise immer dann eingesetzt werden, wenn eine Partei, die mittels des Signaturschlüssels 200 signiert, weiß, welche Signaturschlüssel 200 alle denkbaren Empfänger der signierten Datei, die diese Datei mit dem Signaturschlüssel 200 verifizieren möchten, schon erhalten haben. Dies kann insbesondere dann der Fall sein, wenn alle Signaturschlüssel 200 veröffentlicht und jederzeit abgefragt werden können, z.B. in einem Blockchain-Kontext.

Das erfindungsgemäße Verfahren wird mittels eines erfindungsgemäßen Signaturmoduls ausgeführt. Das Signaturmodul ist dazu eingerichtet, den Bedarfswert bereitzuhalten und dem Bedarfswert entsprechend neue XMSS-Bäume 500, 600 in die Hashbaum-Struktur 100 zu integrieren.

Das erfindungsgemäße Signaturmodul weist dazu einen Speicher auf, der die Hashbaum-Struktur 100 speichert und weist zudem eine Auswerteinheit zur Auswertung des Bedarfswerts sowie ein Schlüsselgenerierungsmodul auf, welches zur Generierung zusätzlicher Schlüssel als Blätter mindestens eines weiteren XMSS-Baums 500, 600 eingerichtet ist und welches zur Integration des mindestens einen weiteren XMSS-Baums 500, 600 in die Hashbaum-Struktur 100 mittels Signierens mit einem Einmalschlüssel der Wurzel des mindestens einen weiteren XMSS-Baums 500, 600 eingerichtet ist.

Bei dem erfindungsgemäßen Verfahren zur Datensignatur werden die Signaturschlüssel 200 wie zuvor nach dem erfindungsgemäßen Verfahren zur Datensignatur bereitgestellten Signaturen genutzt, Daten, insbesondere Dokumente, digital zu signieren.

Mittels des Verfahrens zur Datensignatur werden Kommunikationsdaten signiert und die signierten Kommunikationsdaten werden ausgetauscht. Auf diese Weise wird ein erfindungsgemäßes Verfahren zur authentifizierten Kommunikation durchgeführt.

## Patentansprüche

1. Computerimplementiertes Verfahren zur Bereitstellung von kryptographischen Schlüsseln (200) zur Datensignatur, bei welchem eine Mehrzahl von Schlüsseln (200) als Blätter einer Hashbaum-Struktur (100) mit mindestens einem ersten Hashbaum (30) bereitgestellt werden und bei welchem die Anzahl von Hashbäumen (30, 500, 600) der Hashbaumstruktur (100) nicht vorbestimmt ist und bei welchem ein Bedarfskriterium für einen Bedarf an zusätzlichen Schlüsseln (200) herangezogen und ausgewertet wird und dann, wenn festgestellt wird, dass das Bedarfskriterium erfüllt ist, eine Anzahl zusätzlicher Schlüssel (200) generiert wird, welche als Blätter mindestens eines weiteren Hashbaums (500, 600) bereitgehalten werden, wobei der mindestens eine weitere Hashbaum (500, 600) derart in die Hashbaum-Struktur (100) integriert wird, dass jeweils die Wurzel des mindestens einen weiteren Hashbaums (500, 600) mit einem Blatt der Hashbaumstruktur (100) signiert wird.

2. Verfahren nach dem ersten Anspruch, bei welchem die Verfahrensschritte des ersten Anspruchs wiederholt werden.

3. Verfahren nach einem der vorhergehenden Ansprüche, bei welchem die Hashbaumstruktur (100) eine Multi-Tree-Struktur ist und bei welchem der erste Hashbaum (30) und der mindestens eine weitere Hashbaum (500, 600) vorzugsweise XMSS-Hashbäume sind.

4. Verfahren nach einem der vorhergehenden Ansprüche, bei welchem die Schlüssel (200) Einmalschlüssel sind.

5. Verfahren nach einem der vorhergehenden Ansprüche, bei welchem die Schlüssel (200) hashbasierte Schlüssel sind.

6. Verfahren nach einem der vorhergehenden Ansprüche, bei welchem die Schlüssel (200) jeweils öffentliche Schlüssel je eines asymmetrischen Schlüsselpaares sind.

7. Verfahren nach einem der vorhergehenden Ansprüche, bei welchem die Schlüssel (200) jeweils Winternitz-Signatur-Schlüssel und/oder WOTS-Schlüssel und/oder WOTS+-Schlüssel sind, die zur Signatur nach dem Winternitz-Signatur-Verfahren und/oder WOTS-Signatur-Verfahren und/oder WOTS+-Signatur-Verfahren ausgebildet sind.

8. Verfahren nach einem der vorhergehenden Ansprüche, bei welchem die Schlüssel (200) jeweils Lamport-Signatur-Schlüssel sind, die zur Signatur nach dem Lamport-Signatur-Verfahren ausgebildet sind

9. Verfahren nach einem der vorhergehenden Ansprüche, bei welchem das Bedarfskriterium von einer Anzahl bereits zur Signatur genutzter Schlüssel (200) der Hashbaum-Struktur (100) abhängt.

10. Verfahren nach einem der vorhergehenden Ansprüche, bei welchem das Bedarfskriterium von einer Anzahl noch zur Nutzung vorgesehener Schlüssel (200) abhängt.

11. Verfahren nach einem der vorhergehenden Ansprüche, bei welchem das Bedarfskriterium von einem Alter der Hashbaum-Struktur (100) oder des ersten Hashbaums (30) abhängt.

12. Signaturmodul, ausgebildet zur Ausführung eines computerimplementierten Verfahrens zur Bereitstellung von kryptographischen Schlüsseln (200) nach einem der vorhergehenden Ansprüche, insbesondere aufweisend einen Speicher, speichernd eine Hashbaum-Struktur (100) mit mindestens einem ersten Hashbaum (30) mit einer Mehrzahl von Schlüsseln (200) als Blätter der Hashbaum-Struktur (100), wobei die Anzahl der Hashbäume (30, 500, 600) der Hashbaum-Struktur (100) nicht vorbestimmt ist, aufweisend eine Auswerteinheit zur Auswertung einer Erfüllung eines Bedarfskriteriums sowie ein Schlüsselgenerierungsmodul, welches abhängig von einer Erfüllung des Bedarfskriteriums zur Generierung zusätzlicher Schlüssel (200) als Blätter mindestens eines weiteren Hashbaums (500, 600) eingerichtet ist und welches zur Integration des mindestens einen weiteren Hashbaums (500, 600) in die Hashbaum-Struktur (100) mittels einer Signatur je einer Wurzel des mindestens einen weiteren Hashbaums (500, 600) mittels eines Blatts der Hashbaum-Struktur (100) eingerichtet ist.

13. Verfahren zur Datensignatur, bei welchem mittels eines Verfahrens nach einem der vorhergehenden Ansprüche im Falle eines Bedarfs an zusätzlichen kryptographischen Schlüsseln (200) mindestens ein zusätzlicher kryptographischer Schlüssel (200) bereitgestellt wird und mittels des mindestens einen zusätzlichen kryptographischen Schlüssels (200) mindestens eine Datei signiert wird, vorzugsweise mittels eines Signaturmoduls nach einem der vorhergehenden Ansprüche.

14. Verfahren zur authentifizierten Kommunikation, bei welchem die Kommunikation mittels mindestens einer signierten Datei erfolgt, wobei die mindestens eine signierte Datei mittels eines Verfahrens zur Datensignatur nach einem der vorhergehenden Ansprüche verschlüsselt wird.
